# EUROPÄISCHE PATENTSCHRIFT

(11) **EP 0 701 318 B1**
(45) Veröffentlichungstag und Bekanntmachung des Hinweises auf die Patenterteilung: **26.01.2000**
(21) Anmeldenummer: 95113092.1
(22) Anmeldetag: 21.08.1995
(51) Int. Cl.: H02M 3/335

(54) **Schaltnetzteil**
Switching power supply
Alimentation à découpage

(30) Priorität: 07.09.1994 DE 4431783; 17.12.1994 DE 4445220
(43) Veröffentlichungstag der Anmeldung: 13.03.1996
(73) Patentinhaber: DEUTSCHE THOMSON-BRANDT GMBH, 78048 Villingen-Schwenningen (DE)
(72) Erfinder: Rilly, Gerard, Dr., D-78089 Unterkirnach (DE); Rodriguez-Duran, José, D-78050 Villingen-Schwenningen (DE); Rehm, Markus, D-78087 Villingen-Schwenningen (DE)

(56) Entgegenhaltungen:
- EP-A- 0 610 158
- DE-A- 2 462 211
- US-A- 4 763 235

## Beschreibung

Die Erfindung geht aus von einem Schaltnetzteil gemäß dem Oberbegriff des Anspruchs 1. Ein derartiges Schaltnetzteil enthält unter anderem einen periodisch betätigten Schalttransistor und einen Transformator zur Erzielung der galvanischen Trennung und zur Erzeugung von Betriebsspannungen unterschiedlicher Amplitude und Polarität. In der Praxis ist man bemüht, den Transformator zu verkleinern, um dadurch Kosten und Gewicht zu verringern. Eine derartige Verkleinerung des Transformators ist möglich durch eine Erhöhung der Arbeitsfrequenz des Schaltnetzteils, z.B. von 30 kHz auf 120 kHz. Bei einer derartigen Erhöhung der Arbeitsfrequenz steigen jedoch die sogenannten Einschaltverluste des Schalttransistors proportional mit der Arbeitsfrequenz an und erreichen unzulässig hohe Werte.

Aus der DE 24 62 211 OS ist ein Schaltnetzteil mit einem im Basisweg liegenden Sperrkondensator nach dem Oberbegriff des Anspruchs 1 bekannt. Aus der EP 0 610 158 A1 sind sogenannte "nullspannungsschaltende" Schaltnetzteile bekannt, bei denen der Schalttransistor bei einer Kollektor-Emitter-Spannung von Null Volt durchgeschaltet wird, um Einschaltverluste zu vermeiden.

Der Erfindung liegt die Aufgabe zugrunde, ein Schaltnetzteil ohne nennenswerte zusätzliche Bauelemente so weiterzubilden, daß die Einschaltverluste des Schalttransistors minimiert werden und der Transformator ohne eine unzulässige Erhöhung der Einschaltverluste verkleinert werden kann. Diese Aufgabe wird durch die im Anspruch 1 angegebene Erfindung gelöst. Vorteilhafte Weiterbildungen der Erfindung sind in den Unteransprüchen angegeben.

Das erfindungsgemäße Schaltnetzteil arbeitet nach dem Sperrwandlerprinzip und enthält einen Netzgleichrichter, einen Transformator, der eine mit dem Netzgleichrichter verbundene primäre Wicklung aufweist, einen mit der primären Wicklung verbundenen Schalttransistor und einen in dessen Basisweg liegenden Sperrkondensator, dessen der Basis abgewandtes Ende mit einem Ladeweg und über einen zum Sperren des Schalttransistors leitend gesteuerten Steuertransistor mit einem Bezugspotential verbunden ist. Durch die Induktivität und Streukapazitäten des Transformators und am Transformator anliegenden Kapazitäten entsteht nach der Rücklauf-Entladungszeit des Transformators eine Schwingung. Der Steuertransistor ist während der Rücklauf-Entladungszeit und der anschließenden Schwingphase des Transformators so lange leitend gesteuert, bis die Kollektorspannung des Schalttransistors auf ein Minimum abgefallen ist, und in dem der Schalttransistor über einen frequenzbestimmenden Kondensator und eine Schaltstufe durchgeschaltet wird, wobei der frequenzbestimmende Kondensator mit einer dem Netz proportionalen und leistungsabhängigen Spannung während der leitenden Zeit des Schalttransistors geladen wird, und während der Sperrphase des Schalttransistors entladen wird und hierdurch den Einschaltzeitpunkt des Schalttransistors bestimmt.

Der Einschaltzeitpunkt des Schalttransistors ist insbesondere durch das Ende der Entladephase des frequenzbestimmenden Kondensators bestimmt, an dem die Schaltstufe durchschaltet.

Dadurch ergibt sich folgende vorteilhafte Wirkung. Ein Schaltnetzteil mit einer Arbeitsfrequenz von 25 kHz hat Einschaltverluste des Schalttransistors von ca 0,6 W. Bei einer Erhöhung der Arbeitsfrequenz um den Faktor 4 auf etwa 100 kHz würden daher die Einschaltverluste auf etwa 2,4 W ansteigen. Durch die erfindungsgemäße Steuerung des Schalttransistors können jedoch Einschaltverluste von etwa 0,04 W erreicht werden. Diese vorteilhafte Wirkung wird somit lediglich durch eine besonders vorteilhafte Art der Steuerung des Steuertransistors erreicht, während zusätzliche Bauteile praktisch nicht erforderlich sind. Durch die Verkleinerung des Transformators kann auch die den Transformator tragende gedruckte Leiterplatte (PCB = printed circuit board) verkleinert werden. Auch kann durch die beträchtliche Verringerung der Einschaltverluste an dem Schalttransistor ein für diesen Transistor vorgesehenes Kühlblech kleiner werden oder sogar gänzlich entfallen. Gleiches gilt für den Widerstand und die Diode an dem sogenannten Snubber.

Der Steuertransistor wird vorzugsweise von einem Oszillator gesteuert, der mehrere Funktionen ausübt. Der Oszillator erzeugt die Steuerspannung für den Steuertransistor und dadurch für den Schalttransistor. Der Oszillator dient außerdem als Startoszillator, indem ein Eingang des Oszillators mit den Netzklemmen verbunden ist. Der Oszillator dient außerdem zur Änderung der Arbeitsfrequenz des Schaltnetzteils in Abhängigkeit von der jeweils abgegebenen Leistung und ermöglicht dadurch einen Standby-Betrieb mit einer stark herabgesetzten Leistung von z.B. 5 W, ohne daß dafür ein sogenannter Paketbetrieb für die Steuerung des Schalttransistors erforderlich ist. An einem Steuereingang des Oszillators liegt eine dem Netz proportionale und leistungsabhängige Spannung an, und am anderen eine Spannung, die von der Amplitude der zur Stabilisierung der erzeugten Betriebsspannung dienenden Regelspannung abhängig ist. Außerdem ist an den Oszillator eine aus der Regelschaltung abgeleitete Spannung angelegt, die im Standby-Betrieb die Frequenz des Oszillators und damit die Arbeitsfrequenz des Schaltnetzteils mit sinkender Leistungsabgabe verringert. Der Oszillator ermöglicht dabei eine Steuerung des Schalttransistors in Abhängigkeit von der Netzspannung und der Leistung. Dabei liegt zwischen den Netzklemmen und dem Sperrkondensator im Basisweg des Schalttransistors ein so bemessener Ladeweg, daß der Ladestrom des Sperrkondensators mit steigender Netzspannung zunimmt.
Der Steuertransistor ist vorzugsweise mit einem zweiten Transistor zu einer Schaltung mit Thyristoreigenschaft oder einer Darlington-Schaltung ergänzt.

Bei einer Weiterbildung ist eine Teilwicklung einer Zusatz-Primärwicklung des Transformators über eine Gleichrichterschaltung an den Sperrkondensator angeschlossen. Dabei ist ein Ende der Zusatz-Primärwicklung über eine Gleichrichterschaltung an einen Strommeßwiderstand am Emitter des Schalttransistors angeschlossen.

Die Erfindung wird im folgenden anhand der Zeichnung erläutert. Darin zeigen
- Fig. 1: ein vollständiges Schaltbild eines erfindungsgemäß ausgebildeten Schaltnetzteils und
- Fig. 2: Kurven zur Erläuterung der Wirkungsweise der Schaltung nach Fig. 1.

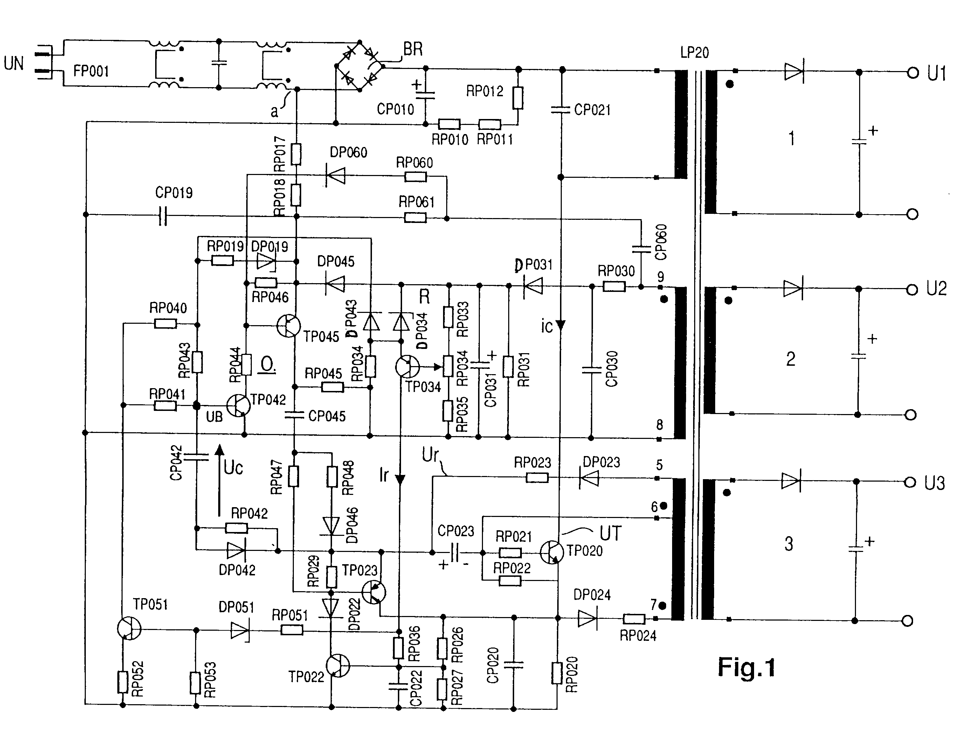

In Fig. 1 sind dargestellt unter anderem die Netzspannung UN, der Netzgleichrichter BR, der zur galvanischen Trennung und Transformation dienende Transformator LP20, Gleichrichterschaltungen 1, 2, 3 zur Erzeugung von Betriebsspannungen U1, U2, U3, der Steueroszillator O mit den Transistoren TP042, TP045, der eigentliche Schalttransistor TP020, der Sperrkondensator CP023, die Treiberschaltung mit dem Steuertransistor TP023 und dem Transistor TP022, die zur Stabilisierung dienende Regelschaltung mit der Diode DP031, dem Transistor TP034 und der Diode DP034, der sogenannte Snubber-Kondensator CP021 und die Startschaltung mit den Anlauf-Widerständen RP017 und RP018.

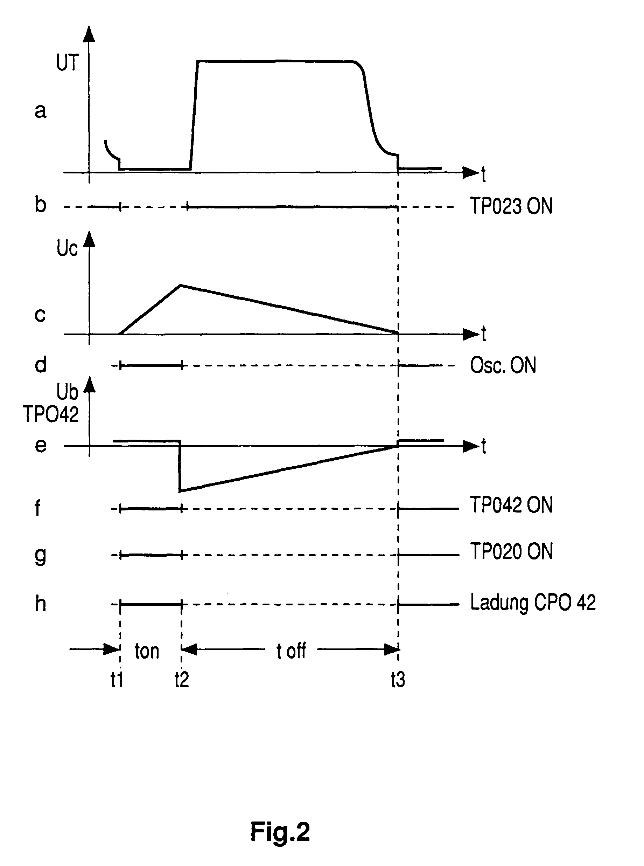

Im folgenden wird die Wirkungsweise dieser Schaltung nacheinander anhand der Fig. 2 für verschiedene Funktionen erläutert.

### Steuerung des Schalttransistors zur Verringerung der Einschaltverluste.

Während der Zeit toff ist der Schalttransistor TP020 gesperrt. Diese Sperrung erfolgt dadurch, daß der während der Einschaltzeit ton mit der dargestellten Polarität aufgeladene Sperrkondensator CP023 durch die leitend gesteuerten Transistoren TP023 und TP022 an seiner linken, positiv geladenen Elektrode auf Masse gezogen wird. Dadurch entsteht an der Basis von TP020 eine negative Spannung, die TP020 sperrt. Am Ende der Sperrzeit würde ohne besondere Maßnahmen der Transistor TP020 wieder eingeschaltet, wenn an seinem Kollektor noch eine nennenswerte Spannung UT steht. Der Transistor TP020 muß dann zunächst den Snubber-Kondensator CP021 entladen, so daß an TP020 unzulässig hohe Einschaltverluste auftreten.

Die Steuerung des Steuertransistors TP023 und damit das Einschalten von TP020 erfolgt jetzt im Zeitpunkt t3 zu einem Zeitpunkt, in dem die Spannung UT am Kollektor von TP020 auf einen Minimalwert abgefallen ist. TP020 schaltet dann praktisch bei einer sehr kleinen Spannung UT ein, so daß die genannten Einschaltverluste weitestgehend vermieden werden. Der Steuertranistor TP023, der an sich zum Abschalten von TP020 im Zeitpunkt t2 dient, wird also zusätzlich zu einem derart verzögerten Einschalten von TP020 ausgenutzt, daß jeweils bei diesem Einschalten keine nennenswerten Einschaltverluste mehr entstehen.

### Startphase

Beim Einschalten des Schaltnetzteils ist die Netzspannung am Punkt a des Netzgleichrichters BR praktisch unverzögert vorhanden. Dadurch wird über die Widerstände RP017 und RP018 der Kondensator CP019 zunächst aufgeladen. Wenn die Spannung an CP019 größer wird als die Zenerspannung von DP019, gelangt ein Strom in den Kondensator CP042 und an die Basis von TP042. Dieser Transistor wird leitend und steuert dadurch auch TP045 leitend. Der Kondensator CP019 wird nunmehr über den Weg TP045-CP045-RP048-DP046 in den Kondensator CP023 und weiter in die Basis von TP020 entladen, so daß TP020 leitend gesteuert werden kann. Der Anlauf besteht aus einem 50 Hz Paketbetrieb mit einer Schaltfrequenz von ca 2 kHz. Der Transformator LP20 überträgt also zunächst sehr wenig Leistung, was im Kurzschlußfall der Ausgangsspannungen zu keinem unzulässigen Betriebszustand führt (keine erhöhte Temperatur, keine Bauteile werden zerstört). Mit dem Ansteigen der Ausgangsspannungen wird die Zenerspannung von DP034 überschritten. Es fließt zusätzlich Strom über DP043 in die Basis von TP042, und es entsteht eine kontinuierliche Schaltfrequenz von ca 100 kHz, was eine große Leistungsübertragung am Trafo bewirkt. Die Vorteile dieses speziellen Startvorganges liegen nicht nur in den sicherheitsrelevanten Schutzvorkehrungen, sondern auch im äußerst geringen Anlaufstrom (max. 230 µAeff), was die Verlustleistung in einem sonst üblicherweise 4-Watt-Anlaufwiderstand auf 40 mW reduziert. Die Transistoren TP042 und TP045 bilden einen Steueroszillator für die Steuerung von TP020, der im Normalbetrieb den Zündimpuls für das periodische Einschalten von TP020 erzeugt. Da das Laden des Sperrkondensators CP023 zeitgleich mit dem Leiten des Schalttransistors TP020 ist, wird ein sicheres Ausschalten des Schalttransistors auch beim allerersten Impuls garantiert.

### Schalten des Schalttransistors TP020

Für das Abschalten von TP020 werden TP022 und TP023 durch den ansteigenden Kollektorstrom am Meßwiderstand RP020 leitend gesteuert. Die Kathode von DP042 liegt dann praktisch auf Masse. Durch die Vorladung von CP042 gibt es eine negative Spannung an der Basis von TP042. TP042 wird dadurch gesperrt. CP042 wird geladen mit einem Strom, der insgesamt zwei Wege hat, und zwar beim Start direkt von Netz über RP019 und durch eine von der Regelschaltung abgeleitete Spannung über DP043, RP043, RP040 und RP041. Wenn z.B. die Sekundärspannungen U1, U2, U3 ansteigen, nimmt dieser Ladestrom abhängig von der Spannung im Regelkreis zu. Wenn CP042 auf 0,7 V geladen ist, wird TP042 wieder leitend. Der leitend werdende TP045 erhält am Kollektor eine positive Spannung, die einen Impuls für den Ladeweg von CP045 darstellt. Dadurch wird DP046 leitend, ein Basisstromimpuls für TP020 erzeugt und gleichzeitig über RP047 der Steuertransistor TP023 gesperrt. Danach fließt ein Basisstrom durch die Mitkopplungswicklung des Transformators LP20 von der Basiswicklung 6, 7. Wenn TP020 leitet, wird DP024 leitend und transformiert die Spannung in einen Basisstrom durch RP021 und RP024 in die Basis von TP020. Der Widerstand RP022 an der Basis von TP020 kann mit etwa 4,7 kOhm relativ klein bemessen sein. Das hat den Vorteil, daß der Basiskreis, der empfindlich ist gegen äußere Einflüsse, relativ niederohmig wird und äußere Störspannungen auf die Schaltung nur einen geringen Einfluß haben.

### Regelung für die Stabilisierung

Die Stabilisierung der Ausgangsspannungen U1, U2, U3 erfolgt durch eine primärseitige Regelung. Von der Primärwicklung 8, 9 des Transformators LP20 wird eine die Amplitude von U1, U2, U3 darstellende Spannung abgenommen und der Regelschaltung R mit dem Transistor TP034, der Zenerdiode DP034 und den dargestellten üblichen Bauteilen zugeführt. Der daraus gewonnene Regelstrom Ir gelangt über RP036 auf die Thyristor oder Darlington-Schaltung mit den Transistoren TP022 und TP023 und bewirkt eine Abschaltung des Stromes ic durch den Schalttransistor TP020 in Abhängigkeit von der Amplitude von U1, U2, U3. Durch diese Regelung des Kollektorstromes ic von TP020 werden die Ausgangsspannungen U1, U2, U3 in der Amplitude stabilisiert.

### Frequenzänderung im Standby-Betrieb

Es wird angenommen, daß das Schaltnetzteil im Normalbetrieb mit einer erhöhten Frequenz von 120 kHz arbeitet. Im Standby-Betrieb wird die abgegebene Leistung durch Abschaltung der an U1, U2, U3 angeschlossenen Verbraucher stark verringert, z.B. von 80 W auf 5 W. Dadurch würde an sich die Frequenz ansteigen, was aber wegen der zu kleinen Einschaltzeit unzulässig wäre. Die Schaltung ist nun so bemessen, daß sie im Normalbetrieb mit 150 kHz und 35 W arbeitet. Bei Standby-Betrieb wird nun die Arbeitsfrequenz etwa auf 20 kHz herabgesetzt. Dadurch wird die Leistung um den Faktor 7 auf etwa 5 W reduziert, was etwa der Leistung für Standby- Betrieb entspricht. Vorteilhaft dabei ist, daß nunmehr ein Standby-Betrieb ohne sogenannten Paketbetrieb möglich ist. Die Einschaltzeit ton kann dann in vorteilhafter Weise größer gewählt werden, da die Frequenz entsprechend verringert ist. Der Strom ist ebenfalls entsprechend klein, so daß die Temperatur an dem Schalttransistor TP020 nicht unzulässig ansteigt.

Der Standby-Betrieb mit der herabgesetzten Frequenz wird in der dargestellten Schaltung folgendermaßen bewirkt. Die Frequenzänderung erfolgt durch den Transistor TP051, der den frequenzbestimmenden Ladestrom für den Kondensator CP042 verringert. TP051 wird vom Ausgang der Regelschaltung R gesteuert. Wenn der Strom in TP034 der Regelschaltung R ansteigt, wird die Leistung reduziert. Die Spannung an dem Widerstand RP036 steigt. Wenn eine durch die Zenerdiode DP051 vorgegebene Schwellwertspannung überschritten wird, wird TP051 leitend und verringert die Frequenz des Oszillators O und damit die Arbeitsfrequenz des Schaltnetzteils.

Fig. 2a zeigt die Spannung UT am Kollektor von TP020. Es ist ersichtlich, daß beim Einschalten von TP020 im Zeitpunkt t3 die Spannung UT einen Minimalwert angenommen hat. Fig. 2b zeigt, daß der Steuertransistor TP023 so lange leitend gesteuert bleibt, bis die Spannung UT den genannten Minimalwert hat. Fig. 2c zeigt die Spannung Uc an CP042. Fig. 2d zeigt, daß der Oszillator während der Einschaltzeit ton eingeschaltet und während der Sperrzeit toff von TP020 ausgeschaltet ist. Fig. 2e zeigt die Spannung Ub an der Basis von TP042. Fig. 2f zeigt, wann TP042 leitend und nicht leitend ist, während Fig. 2g dasselbe zeigt für TP020. Fig. 2h zeigt, wann CP042 geladen wird.

## Patentansprüche

1. Schaltnetzteil nach dem Sperrwandlerprinzip mit einem Transformator (LP20), einem Schalttransistor (TP020) in Serie mit einer primären Wicklung des Transformators (LP20), einem in dem Basisweg des Schalttransistors (TP020) liegenden Sperrkondensator (CP023), dessen der Basis abgewandtes Ende mit einem Ladeweg und über einen zum Sperren des Schalttransistors (TP020) leitend gesteuerten Steuertransistor (TP023) mit einem Bezugspotential verbunden ist, **dadurch gekennzeichnet,**
daß das Schaltnetzteil einen frequenzbestimmenden Kondensator (CP042) aufweist, der über einen Ladeweg (RP042, RP023, DP023, LP20(5)) mit einer Spannung, die leistungsabhängig und dem Netz proportional ist, während der leitenden Zeit (ton) des Schalttransistors (TP20) geladen wird, und der während der Sperrphase (toff) des Schalttransistors (TP020) entladen wird, wobei das Ende dieser Entladephase (t3) den Einschaltzeitpunkt (t1, t3) des Schalttransistors (TP020) bestimmt, indem der Steuertransistor (TP023) während der Rücklauf-Entladungszeit und einer anschließenden Schwingphase des Transformators (LP20), die durch dessen Induktivität und Streukapazitäten sowie an dem Transformator (LP20) anliegenden Kapazitäten (CP021, CP030) entsteht, so lange leitend gesteuert ist (t3), bis die Kollektorspannung (UT) des Schalttransistors (TP020) auf ein Minimum abgefallen ist.

2. Netzteil nach Anspruch 1, **dadurch gekennzeichnet**, daß der frequenzbestimmende Kondensator (CP042) in der Sperrphase (toff) über einen Entladeweg (DP034, DP043, RP043) durch eine Spannung entladen wird, die von der Amplitude der zur Stabilisierung der erzeugten Betriebsspannungen dienenden Regelspannung abhängig ist.

3. Netzteil nach Anspruch 1 oder 2, **dadurch gekennzeichnet,** daß das Schaltnetzteil einen Steueroszillator (O) aufweist, der im Normalbetrieb den Zündimpuls für das periodische Einschalten des Schalttransistors (TP020) erzeugt, und der zusätzlich als Startoszillator für das Schaltnetzteil dient.

4. Netzteil nach Anspruch 3, **dadurch gekennzeichnet,** daß an einem Steuereingang des Oszillators eine dem Netz proportionale Spannung anliegt, und am anderen eine Spannung, die von der Amplitude der zur Stabilisierung der erzeugten Betriebsspannungen dienenden Regelspannung abhängig ist.

5. Netzteil nach Anspruch 1, **dadurch gekennzeichnet,** daß zwischen den Netzklemmen und dem Sperrkondensator (CP023) ein so bemessener Ladeweg (RP023, DP023, LP020 (5-6)) vorgesehen ist, daß die Ladung des Sperrkondensators (CP023) mit steigender Netzspannung zunimmt.

6. Schaltnetzteil nach Anspruch 1 oder 2, **dadurch gekennzeichnet,** daß eine Teilwicklung (5, 6) einer Zusatz-Primärwicklung (5, 7) des Transformators (LP20) über eine Gleichrichterschaltung (DP023, RP023) an den Sperrkondensator (CP023) angeschlossen ist.

7. Schaltnetzteil nach Anspruch 6, **dadurch gekennzeichnet,** daß ein Ende (7) der Zusatz-Primärwicklung (5, 7) über eine Gleichrichterschaltung (DP024, RP024) an einen Strommeßwiderstand (RP020) am Emitter des Schalttransistors (TP020) angeschlossen ist.

8. Schaltnetzteil nach Anspruch 1 oder 2**, dadurch gekennzeichnet,** daß für den Standby-Betrieb die Arbeitsfrequenz etwa im Verhältnis der Verringerung der Leistung herabgesetzt ist.

## Claims

1. A switch mode power supply according to the flyback principle including a transformer (LP20), a switching transistor (TP020) connected in series with a primary winding of said transformer (LP20), an isolating capacitor (CP023), connected into the base path of said switching transistor (TP020), the terminal of said capacitor remote from the base being connected to a charging path and being connected to a reference potential via a control transistor (TP023) turned on for turning off said switching transistor (TP020),
characterized in that
said switch mode power supply includes a frequency-determining capacitor (CP042) which is charged during the on-time (ton) of said switching transistor (TP20) via a charging path (RP042, RP023, DP023, LP20(5)) by a voltage which is dependent on the power and proportional to the mains and which is discharged during the off-time of said switching transistor (TP020) wherein the end of this discharging phase (t3) determines the turn on time (t1, t3) of said switching transistor (TP020) by turning on said control transistor (TP023) during the flyback discharging period and a succeeding swinging phase of said transformer (LP20) produced by its inductivity and stray capacitances and the capacitances (CP021, CP030) connected to said transformer (LP20) until the collector voltage (UT) of said switching transistor (TP020) has decreased to a minimum.

2. The power supply according to claim 1, characterized in that the frequency-determining capacitor (CP042) is discharged during the off-phase (toff) via a discharging path (DP034, DP043, RP043) by a voltage being dependent on the amplitude of the control voltage used for stabilization of the produced operating voltages.

3. The power supply according to claim 1 or 2, characterized in that said power supply includes a control oscillator (O) producing during normal operation the trigger pulse for the periodic switching-on of the switching transistor (TP020) and being used additionally as starting oscillator for said power supply.

4. The power supply according to claim 3, characterized in that a voltage proportional to mains is applied to a control input of said oscillator and a voltage being dependent on the amplitude of the control voltage used for stabilization of the produced operating voltages is applied to another control input of said oscillator.

5. The power supply according to claim 1, characterized in that there is provided between the mains terminals and the isolating capacitor (CP023) a charging path (RP023, DP023, LP020(5-6)) being dimensioned in such a way that the charge of said isolating capacitor (CP023) increases with increasing mains voltage.

6. The power supply according to claim 1 or 2, characterized in that a partial winding (5, 6) of an auxiliary primary winding (5, 7) of said transformer (LP20) is connected to said isolating capacitor (CP023) via a rectifier circuit (DP023, RP023).

7. The power supply according to claim 6, chracterized in that one terminal (7) of said auxiliary primary winding (5, 7) is connected to a current sensing resistor (RP020) at the emitter of said switching transistor (TP020) via a rectifier circuit (DP024, RP024).

8. The power supply according to claim 1 or 2, characterized in that for standby mode the working frequency is decreased substantially in the ratio of the decrease of the power.

## Revendications

1. Alimentation à découpage conforme au principe du convertisseur à oscillateur bloqué, contenant un transformateur (LP20), un transistor de commutation (TP020) montés en série avec un enroulement primaire du transformateur (LP20), un condensateur de blocage (CP023) situé sur le parcours de base du transistor de commutation (TP020), dont l'extrémité modifiée à la base est reliée à un circuit de charge et à un potentiel de référence sur un transistor de commande (TP023) commandé par conduction pour bloquer le transistor de commutation (TP020), **caractérisée en ce qu**'elle présente un condensateur (CP042) déterminant la fréquence, qui est chargé sur un circuit de charge (RP042, RP023, DP023, LP20(5)) pendant le temps de conduction (ton) du transistor de commutation (TP20), à une tension dépendant de la puissance et proportionnelle à l'alimentation et est déchargé pendant la phase de blocage (toff) du transistor de commutation (TP20), où la fin de cette phase de déchargement (t3) détermine le moment de fonctionnement (t1, t3) du transistor de commutation (TP020) tandis que le transistor de commande (TP023) est commandé par conduction (t3) pendant le temps de déchargement en retour et pendant la phase d'oscillation du transformateur (LP20) qui s'ensuit en raison de l'inductance de ce dernier et de ses capacités de fuite et en raison des capacités adjacentes au transformateur (LP20), jusqu'à ce que la tension collecteur (UT) du transistor de commutation (TP020) chute à son niveau minimum.

2. Alimentation conforme à la revendication 1, **caractérisée en ce que** le condensateur déterminant la fréquence (CP042) est déchargé pendant la phase de blocage (toff) sur un circuit de déchargement (DP034, DP043, RP043) par une tension qui dépend de l'amplitude de la tension de réglage servant à stabiliser les tensions effectives produites.

3. Alimentation conforme à la revendication 1 ou 2, **caractérisée en ce que** l'alimentation à découpage présente un oscillateur de commande (O) produisant en fonctionnement normal l'impulsion de démarrage de la commutation périodique du transistor de commutation (TP020) et servant en outre d'oscillateur de démarrage pour l'alimentation à découpage.

4. Alimentation conforme à la revendication 3, **caractérisée en ce qu'**une tension proportionnelle au secteur est située au niveau de l'entrée de commande de l'oscillateur et une tension qui dépend de l'amplitude de la tension de réglage servant à stabiliser les tensions effectives produites est située à l'autre extrémité.

5. Alimentation conforme à la revendication 1, **caractérisée en ce qu**'il est prévu, entre les bornes de l'alimentation et le condensateur de blocage (CP023), un circuit de charge (RP023, DP023, LP020 (5-6)) dimensionné de sorte que le chargement du condensateur de blocage (CP023) augmente avec la hausse de la tension du secteur.

6. Alimentation conforme à la revendication 1 ou 2, **caractérisée en ce qu'**un enroulement partiel (5, 6) d'un enroulement primaire supplémentaire (5, 7) du transformateur (LP20) est raccordé au condensateur de blocage (CP023) sur un circuit redresseur (DP023, RP023).

7. Alimentation conforme à la revendication 6, **caractérisée en ce qu**'une extrémité (7) de l'enroulement primaire supplémentaire (5, 7) est raccordée à une résistance ampèremétrique (RP020), au niveau de l'émetteur du transistor de commutation (TP020), sur un circuit redresseur (DP024, RP024).

8. Alimentation conforme à la revendication 1 ou 2, **caractérisée en ce que** la fréquence effective est réduite presque proportionnellement à la réduction de la puissance en mode de fonctionnement standby.
